**Europäisches Patentamt**

**European Patent Office**

**Office européen des brevets**

(19)

(11) Publication number: **0 152 064**
**A2**

(12) # EUROPEAN PATENT APPLICATION

(21) Application number: **85101281.5**

(22) Date of filing: **07.02.85**

(51) Int. Cl.⁴: **G 11 B 5/31**
**G 11 B 5/23, G 11 B 5/265**

(30) Priority: **08.02.84 JP 20078/84**
**26.12.84 JP 272932/84**

(43) Date of publication of application:
**21.08.85 Bulletin 85/34**

(84) Designated Contracting States:
**DE FR GB IT**

(71) Applicant: **HITACHI, LTD.**
**6, Kanda Surugadai 4-chome Chiyoda-ku**
**Tokyo 100(JP)**

(72) Inventor: **Abe, Mitsuo**
**240-15, Nakmurahara**
**Odawara-shi(JP)**

(72) Inventor: **Konishi, Katsuo**
**12-202, Dream-Haitsu, 1403, Matanocho**
**Totsuka-ku Yokohama(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Thin film magnetic head and manufacturing method thereof.**

(57) In a thin film magnetic head (10) including a substrate (1) comprising a non-magnetic material, magnetic cores (2, 3) comprising magnetic thin films formed on the substrate so as to form a ring-shaped magnetic circuit, a non-magnetic gap material (5) located at a part of the magnetic cores so as to form a head gap, and windings (7) wound around the magnetic cores so as to have linkage with the magnetic circuit, a non-magnetic pattern material (8) for defining the value of the gap depth (Gd) is provided on at least a gap depth side portion within a region surrounded by the magnetic circuit of the magnetic cores on the substrate.

FIG. 2

0152064

THIN FILM MAGNETIC HEAD AND

MANUFACTURING METHOD THEREOF

The present invention relates to a thin film magnetic head suitable to apparatus including video tape recorders.

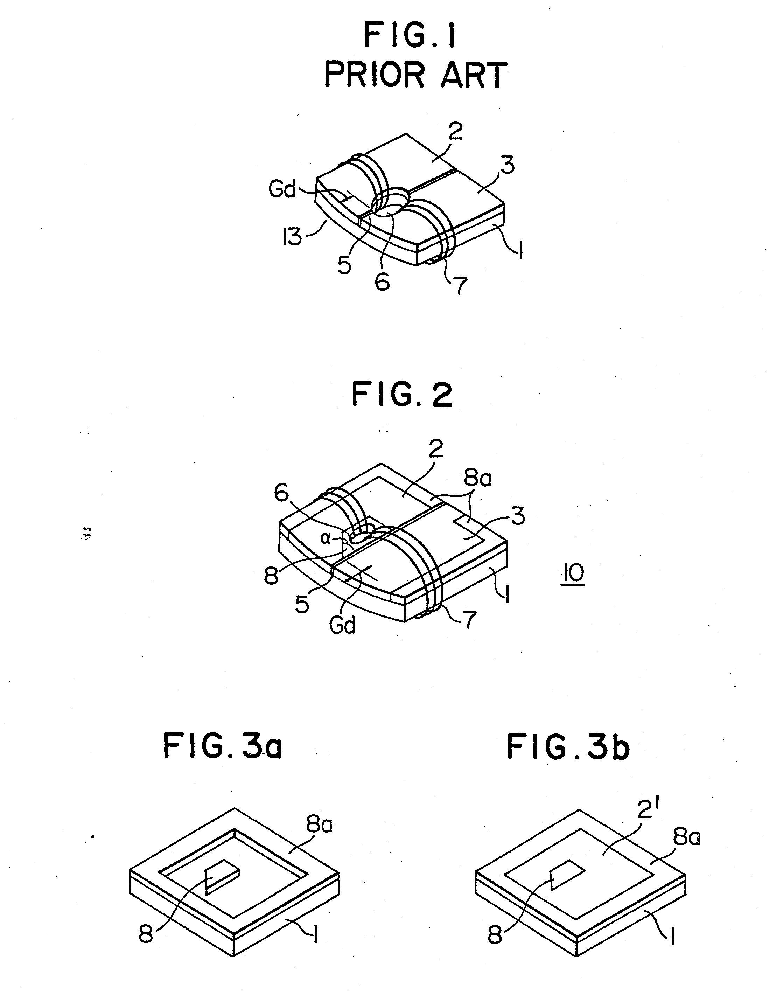

In recent years, metal tapes have been widely used as magnetic tapes for video tape recorders. As a magnetic head suitable to such a metal tape, a thin film magnetic head has been proposed by one of the present inventors as disclosed in the Japanese Utility Model Application Laid-Open No. 141419/83, for example. In such a thin film magnetic head, a magnetic thin film made of sendust, permalloy or the like having a high saturation magnetic flux density is used as the core material. And as shown in Fig. 1, the first magnetic core 2 and the second magnetic core 3 respectively made of magnetic thin films are formed on a non-magnetic substrate 1. A gap 5 formed on the non-magnetic substrate 1 is put between the first and second magnetic cores 2 and 3 and is made of a non-magnetic material. A winding hole 6, i.e., a hole used for passing windings therethrough is provided in the magnetic cores 2 and 3, the gap 5, and the substrate 1 as shown in Fig. 1. Windings 7 are wound through the hole 6 to form the thin film magnetic head.

Since the winding hole 6 regulates the gap depth Gd of the thin film magnetic head 10 in this structure, however, the gap depth Gd depends upon the work precision of the winding hole. Accordingly, it is very diffuclt to attain the gap depth with high precision.

From the restriction of the machine tool, the winding hole 6 is generally round-shaped or oval. From the viewpoint of the head performance and efficiency, it is desired that the above described shape and an acute-angled front end in the direction of the front surface of the head. However, it is difficult to meet the desire by machining. After work, the positioning precision of the winding hole 6 and the face precision (contrary to the face roughness) of the hole edge line and the internal surface of the hole are poor. It is extremely difficult to attain the demanded precision ±5 μm for the gap depth Gd. Because glass or ceramics material having high resistance to wear is generally used as the non-magnetic substrate 1 and such a material is not easily shaved in many cases.

Further, since the winding hole 6 is provided close to the front surface or the tape abrasion surface of the head, the strength of the portion of the gap depth Gd poses a problem. In addition, due to vibration or head generated during work, the magnetic thin film might peel off or its characteristics might be deteriorated. Since the portion of the gap depth Gd along the gap is important in the head performance, the above described problems might bring about fatal results.

If the winding hole is formed at the original substrate stage, the degree of freedom in the work method

0152064

is increased. However, the gap might be short-circuited due to the magnetic thin film adhered to the internal surface of the hole, resulting in trouble to the head performance.

An object of the present invention is to provide a magnetic head having a gap structure defined correctly with high dimension precision.

Another object of the invention is to provide a thin film magnetic head having a well-defined magnetic path region.

Another object of the invention is to provide an integrated magnetic head having a gap of accurate three-dimensional structure formed on one non-magnetic substrate. To attain the above described objects, in accordance with the present invention, means for regulating the gap depth is provided and the gap depth structure is separated from the winding structure. That is to say, in a portion which is surrounded by magnetic cores (magnetic circuit) formed on a non-magnetic substrate and which adjoins the gap depth surface side, a non-magnetic pattern material is provided. And the non-magnetic pattern material functions to regulate the gap depth and prevents the magnetic core (magnetic thin film) from peeling off or being deteriorated in characteristics.

Since a non-magnetic pattern material adjoining a magnetic core is provided on at least the gap depth surface side of a region which is surrounded by the magnetic cores (magnetic circuit) on a non-magnetic substrate, it is possible to realize the dimension of the gap depth with extremely high precision and it is also possible to prevent the film peeling off and characteristics deterioration in the head manufacturing process.

The present invention will be apparent from the following detailed description taken in conjunction with the accompanying drawings, in which:

Fig. 1 is an oblique view of a thin film magnetic head of the prior art;

Fig. 2 is an oblique view of an embodiment of a thin film magnetic head according to the present invention;

Figs. 3a to 3e are drawings for illustrating the manufacturing process of the thin film magnetic head illustrated in Fig. 2;

Fig. 4 is an oblique view of an improvement over the thin film magnetic head illustrated in Fig. 2;

Figs. 5a and 5b are plane views of other examples of non-magnetic patttern materials;

Fig. 6 is an oblique view of the above described thin film magnetic head when it is attached to the base;

Fig. 7 is an oblique view of another embodiment of a thin film magnetic head according to the present invention;

Fig. 8 is an oblique view of still another embodiment of a thin film magnetic head according to the present invention;

Figs. 9a to 9f show the manufacturing process

- 5 -

0152064

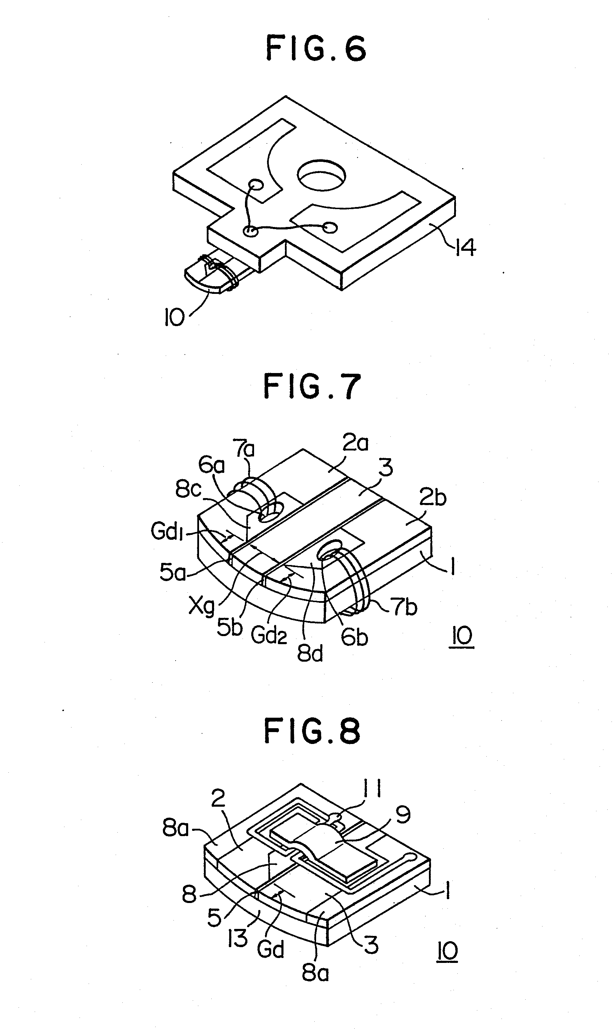

of the thin film mangetic head illustrated in Fig. 8; and

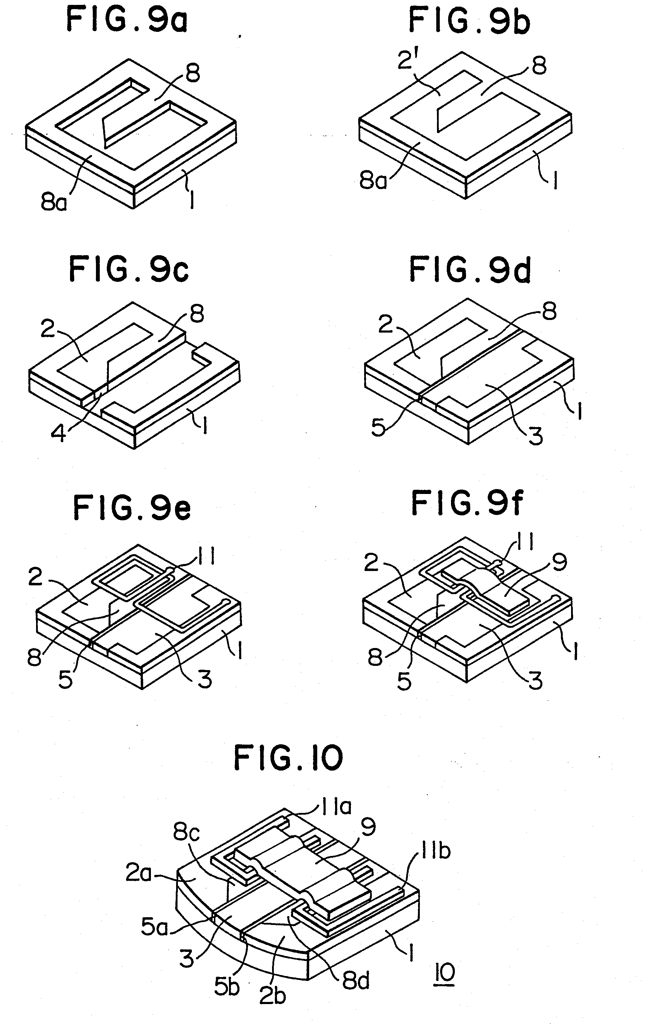

Fig. 10 is an oblique view of application of the thin film magnetic head illustrated in Fig. 8.

An embodiment of a thin film magnetic head according to the present invention will now be described by referring to Fig. 2. The thin film magnetic head of Fig. 2 includes a non-magnetic substrate 1, magnetic cores 2 and 3, a gap material 5, a winding hole 6, windings 7 and a non-magnetic pattern material 8. The non-magnetic substrate 1 is made of crystallized glass or a non-magnetic ceramics material which has high resistance to wear. The non-magnetic substrate 1 is approximately 2 mm square and is 0.1 to 0.3 mm in thickness. The suitable coefficient of thermal expansion of the non-magnetic substrate is approximately $100 \times 10^{-7}$ to $130 \times 10^{-7}$. The magnetic cores 2 and 3 are made of multi-layer films of an amorphous alloy which is mainly composed of Co. Each layer is 5 to 10 $\mu m$ in thickness and is insulated from adjacent layers by $SiO_2$ films having thickness of approximately 0.1 $\mu m$ in order to avoid the eddy current loss in the video frequency band. For the magnetic cores 2 and 3, a sendust alloy may be used instead of an amorphous alloy. A pair of magnetic cores 2 and 3 respectively taking the shape of letters C and I form a magnetic circuit in conjunction with the gap material put between them. The thickness of the magnetic core is chosen to be nearly equal to the track width 10 to 30 $\mu m$. However, the thickness of the portions excepting the gap located on the head front surface side may be increased or decreased. The gap material 5 is a non-magnetic film made of $SiO_2$, for example, and is 0.2 to 0.3 μm in thickness. The direction of the gap face is inclined by a predetermined azimuth angle (10° in the perferred embodiment with respect to the normal direction to non-magnetic substrate 1. The gap material 5 is formed over the entire length in the depth direction of the head. Instead, the gap material 5 may be formed only near the front surface of the magnetic cores 2 and 3. The gap material 5 may also be adhered to the upper faces or the lower faces of the magnetic cores 2 and 3. The pattern materials 8 and 8a are non-magnetic metal materials such as aluminum. Instead, the non-magnetic pattern materials 8 and 8a may be glass or ceramics material which is identical or similar to the above described non-magnetic substrate 1 or may be heat-resisting organic resin (polyimide). On the non-magnetic substrate 1, the non-magnetic pattern materials 8 and 8a are formed on the place where the magnetic cores 2 and 3 are not present. The non-magnetic pattern materials 8 and 8a are nearly equal to the magnetic cores 2 and 3 in thichness and are in contact with the magnetic cores 2 and 3 intervened by a plane (further via the gap material 5 in some places). The non-magnetic pattern material 8 is formed in the place surrounded by the magnetic cores 2 and 3 and may be trapezoidal shown in Fig. 2. Two boundary planes of the trapezoid near the front surface 13 make an acute angle. The angle α is more preferably approximately 40° to 70°. On the other hand, the non-magnetic pattern material 8a is formed on the periphery surrounding the magnetic cores 2 and 3. The non-magnetic pattern material 8a may be omitted. Within the boundaries of the above described non-magnetic pattern material 8, the winding hole 6 is so provided as to pass through the non-magentic substrate 1. The windings 7 are wound through the winding hole 6 to form the thin film magnetic head 10. Although not illustrated in Fig. 2, a non-magnetic metal material (chrome, zirconium, or the like) of approximately 1 to 5 μm is formed between the non-magnetic substrate 1 and the magnetic cores 2 and 3. The similar non-magnetic metal material is also formed over the upper surfaces of the magnetic cores 2 and 3 partly or wholley to improve the precision of the track width. On the upper surfaces of the magnetic cores 2 and 3 and the pattern materials 8 and 8a, a guard film is formed. The guard film is 30 to 50 μm in thickness and is made of alumina, forsterite, or the like which has high resistance to wear and which is close to the material of the magnetic core in coefficient of thermal expansion.

In such a thin film magnetic head 10, the shape of the head magnetic circuit, especially the value of gap depth Gd is uniquely defined by the boundary between the magnetic core 2 and the non-magnetic pattern material 8, and has no connection with the position or face precision of the winding hole 6. That is to say, if the non-magnetic pattern material 8 is formed with high precision, the gap depth can be automatically realized with high precision. In addition, since the surfaces of the winding hole 6 is not in direct contact with the magnetic cores 2 and 3, the magnetic path is defined by the boundary surface of the pattern material 8 and it is possible to prevent peeling off or magnetic characteristics deterioration during the manufacturing process.

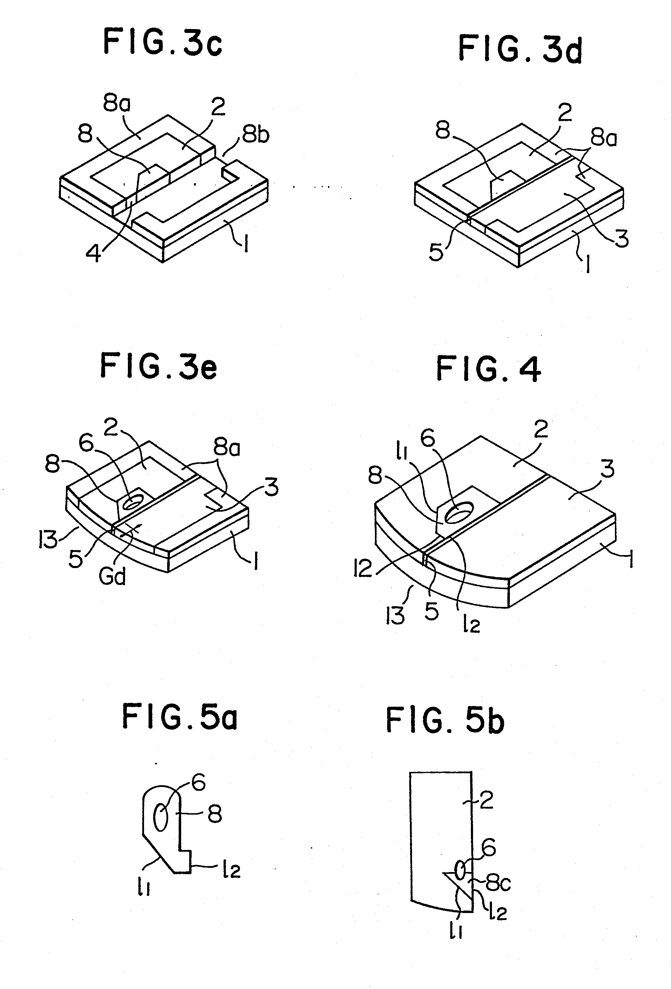

Figs. 3a to 3e show the manufacturing process of the thin film magnetic head illustrated in Fig. 2. The steps of the manufacturing process will now be sequentially described.

In the step of Fig. 3a, the non-magnetic pattern materials 8 and 8a modeling the head magnetic circuit in the negative form are formed on the non-magnetic substrate 1 which is approximately 1 mm in thickness. The thickness of the non-magnetic pattern materials 8 and 8a is chosen to be close to that (10 to 30 μm) of the magnetic core (including the non-magnetic materials placed above and below the magnetic core, if present). Especially for the portion 8 of the non-magnetic pattern material, which is surrounded by the magnetic circuit, severe dimension precision is demanded. When aluminum is used as the non-magnetic pattern material, for example, the following method (1) or (2) is taken. In the method (1), after aluminum is coated by vaporization on the entire surface of the non-magnetic substrate 1, a mask made of another heat-resisting resin is placed on the surface and aluminum is removed by ion etching from above. In the method (2), another heat-resisting resin is formed into a predetermined high precision concave pattern by plasma etching, and aluminum is coated by vaporization and buried into the concave groove, and the resin is removed after aluminum is leveled. As a result, the non-magnetic pattern material 8 is obtained with the position precision of ±2 to 3 µm, the face roughness ±1 to 2 µm of the section, and taper angle, or the angle of the environmental boundary plane measured from the core plane, of 70° to 90°.

In the step of Fig. 3b, a non-magnetic film (not illustrated), a magnetic core 2', and the second non-magnetic film (not illustrated) are successively formed on the concave portion resulting from the step of Fig. 3a. The magnetic core 2' is formed in a thin film by sputtering an amorphous alloy (Co family) or a sendust alloy. For avoiding loss in the high frequency region, the magnetic core 2' is insulated every 5 to 10 µm by a $SiO_2$ film which is 0.1 µm in thickness. And the magnetic core 2' is 10 to 30 µm in total thickness. The $SiO_2$ films are also formed by sputtering. The non-magnetic films are formed by vapor coating or sputtering chrome, zirconium, or the like. The upper surfaces of the non-magnetic pattern materials 8 and 8a are flattened or leveled by abrasion.

In the step of Fig. 3c, a half of the buried magnetic core 2' is removed along the projected gap and its extension to form a gap face 4. In Fig. 3c, a half which does not include the non-magnetic pattern material 8 is removed until the gap face 4 appears at the central part between the non-magnetic pattern materials 8 and 8a. For this removal, a shaving by a diamond tool is effective. Thereby, it becomes possible to obtain a gap face having good linearity and tapered with a predetermined azimuth angle (0° to 10°) with respect to the substrate surface. The diamond tool has passed through a portion 8b. Since the magnetic core on the gap face is held by the non-magnetic pattern materials 8 and 8a in front and in the rear, the film peeling off due to work process can be prevented. For reducing the work hours, the width of the material to be shaved and removed can be reduced to several ten μm in the actual process by providing the magnetic core 2' so as to slightly exceed the projected gap face using the mask sputtering or etching in the step of Fig. 3b, instead of providing the magnetic core 2' on the entire concave surface. The magnetic core 2 taking the shape of letter C is thus obtained.

In the step of Fig. 3d, the gap material 5 made of $SiO_2$ or the like is formed on the gap face 4 by sputtering. The gap material is 0.2 to 0.3 μm in thickness. If mask sputtering is used at this time, it is possible to confine the gap material 5 to a necessary portion of the front part (the surface abraded by the magnetic tape) of the gap face 4. Subsequently, the second magnetic core 3 is adhered and buried in the concave half wherefrom the magnetic core has been removed in the step of Fig. 3c. Although the magnetic core 3 is produced in the same way as the above described magnetic core 2, it is made slightly larger in thickness than the magnetic core 2. The unnecessary film adhered onto the magnetic core 2 is removed by abrasion until the non-magnetic pattern materials 8 and 8a are exposed. The magnetic core 3 taking the shape of letter I is thus obtained. If, at this time, a non-magnetic film is provided on the upper surface of the C-shaped magnetic core 2 and the above described abrasion is terminated within the thickness of the non-magnetic film, the track width is uniquely defined by the thickness of the C-shaped magnetic core 2, resulting in high precision. In the above described abrasion, the entire surface of the magnetic core need not necessarily be leveled, but only the portions on the head front part and on the non-magnetic pattern material 8 may be leveled. Thereafter, a guard film (not illustrated) made of alumina, forsterite, or the like is coated by vaporization by 30 to 50 µm for guarding the magnetic cores 2 and 3.

In the step of Fig. 3f, the winding hole 6 is opened inside the boundary planes of the non-magnetic pattern material 8 by ultrasonic machining. The hole is 0.2 to 0.3 mm in diameter and is round-shaped or oval.

The hole is 0.3 mm or more in depth and reaches the non-magnetic substrate 1. Then the thickness of the non-magnetic substrate 1 is so reduced to 0.1 to 0.3 mm by applying a slicer to its rear face as to pass through the winding hole 6. Then the side of the front surface 13 is subjected to cylinderical abrasion to attain the predetermined gap depth Gd = 20 to 30 $\mu$m. The cylindrical abrasion can be effected while watching that the front face side of the non-magnetic pattern material 8a is removed and the tape rubbing face side of the magnetic core 2 is exposed. Or alternatively, the cylindrical grinding or cylindrical abrasion can be effected while observing on the measuring instrument the change in the inductance value of the winding 7 which is caused by the abrasion of the front surface of the magnetic core 3. When the latter method is adopted, the winding 7 must be wound before the abrasion step. Owing to the function of the non-magnetic pattern material 8, the edge line of the magnetic core 2 becomes clear with high precision. The precision ±5 $\mu$m of the gap depth Gd can be easily attained. Further, since the non-magnetic pattern material 8 guards the magnetic core from the heat or vibration generated during the ultrasonic machining, the film peeling off and the characteristics deterioration can be prevented. If the cylindrical abrasion was effected by watching the removal, the winding 7 is then wound to realize the thin film magnetic head 10 as illustrated in Fig. 1.

In a modified manufacturing method, an non-magnetic substrate with the winding hole 6 perforated thereon beforehand is used. As described before, the gap shortcircuit may be brought about in the prior art. By using the non-magnetic pattern material 8 according to the present invention, however, the trouble of the gap shortcircuit is obviated and the gap depth can be realized with high precision.

The case of one thin film magnetic head has heretofore been described. If a substrate having a large area is used, however, a number of thin film magnetic heads can be produced in the surface at a time, resulting in improved mass productivity. In that case, a step for separating the substrate into thin film magnetic heads is required. By separating the substrate at a portion of the non-magnetic pattern material 8a serving as the boundary, the peeling off and the characteristics deterioration of the magnetic core can be prevented.

Fig. 4 shows an improvement over the thin film magnetic head illustrated in Fig. 2. The thin film magnetic head of Fig. 4 is characterized by the detailed shape of the non-magnetic pattern material. That is to say, the edge line 12 of the front part of the non-magnetic pattern material 8 for defining the gap depth Gd is made nearly parallel to the front face 13. The desirable length of the edge line 12 is approximately several ten μm. The length exceeding 100 μm worsens the head efficiency. Even if a slight error of the gap position is caused in the above described gap face forming step, the value of the gap depth Gd exhibits no change provided that the shape of Fig. 4 is adopted and that the gap position is within the length of the edge line 12. As a result, high precision can be maintained. Such an embodiment can be applied to other embodiments described later.

Although the non-magnetic pattern material 8 is trapezoidal in the embodiment of Fig. 4, it is permitted to use any shape having two boundaries $\ell_1$ and $\ell_2$ which is near the front face and which make an acute angle. For example, the shape illustrated in Fig. 5 may be used.

Fig. 6 shows an example of the above described thin film magnetic head according to the present invention, which is attached to a base 14. The selected attaching face is the upper face of the thin film magnetic head 10 whereon the magnetic core is formed. The first merit in this case is that the gap depth value can be easily read since the shape of the magnetic core can be directly looked at. And the second merit is that the step difference between the base reference face (lower face side in Fig. 6) and the track position can be easily realized with precision.

Fig. 7 shows another embodiment of a thin film magnetic head according to the present invention. In the thin film magnetic head of Fig. 7, a plurality of gaps (two gaps in the case of Fig. 7) are included. A thin film magnetic head 10 of Fig. 7 includes a pair of C-shaped magnetic cores 2a and 2b, a pair of gap materials 5a and 5b, winding holes 6a and 6b, windings 7a and 7b, and non-magnetic pattern materials 8a and 8b. The thin film magnetic head 10 has two gaps 5a and 5b operating independently each other and has a combination of different azimuth angles. This thin film magnetic head 10 is used for a special reproducing function of a video tape recorder. From the viewpoint of the magnetic circuit, the thin film magnetic head 10 has two magnetic circuits which own jointly an I-shaped magnetic core 3 at the center. The I-shaped magnetic core 3 may be formed independently.

In this embodiment as well, the gap depths $Gd_1$ and $Gd_2$ can be obtained with high precision by the function of the non-magnetic pattern materials 8a and 8b in the same way as the embodiments described before. Further, in this embodiment, the relative shift between two gap depths must be avoided and the gap interval Xg must be realized with high precision. These demands are satisfied owing to the high position precision of the non-magnetic pattern materials 8c and 8d according to the present invention. This embodiment is effective not only for the winding system illustrated in Fig. 7 but also for the thin film coil system which will be described later.

Fig. 8 shows still another embodiment of a thin film magnetic head according to the present invention. The thin film magnetic head of Fig. 8 is characterized by the fact that the winding hole is abolished and the winding is realized in the thin film coil form. An non-magnetic substrate 1, an L-shaped magnetic core 2, a gap material 5, an I-shaped magnetic core 3, a non-magnetic pattern material 8, a rear magnetic core 9, and a thin film coil 11 are included in a thin film magnetic head 10. On the non-magnetic substrate 1, the L-shaped core 2 and the I-shaped core 3 confront each other at the head front face side with the gap material 5 put between. Their rear portions are open-circuited. The L-shaped core 2 and the I-shaped core 3 form a front magnetic core. Inside the magnetic cores, the non-magnetic pattern material 8 is formed with nearly identical thickness with the front magnetic core. In the same way as the embodiments described before, the gap depth Gd is realized with high precision. The newly provided rear magnetic core 9 bridges between the L-shaped magnetic core 2 and the I-shaped magnetic core 3 to form a magnetic loop. The thin film coil 11 surrounds portions of the cores jointed by the bridge and takes the shape of spiral having the linkage with the magnetic loop. The thin film coil 11 is disposed above the upper surfaces of the front magnetic core (i.e., the L-shaped magnetic core 2 and the I-shaped magnetic core 3) and those of the non-magnetic pattern materials 8 and 8a and below the rear magnetic core 9. They are insulated each other by $SiO_2$ films. The pattern material 8a may be omitted. In the same way as the front magnetic cores 2 and 3, the rear magnetic core 9 is composed of a magnetic thin film made of an amorphous alloy, a sendust alloy, or the like. The thin film coil 11 is made of conductive metal such as copper or aluminum and is formed in the spiral shape by one to three turns at respective joint portions of the magnetic cores. (For brevity, figures show the case where each leg has one turn.) This coil 11 may be provided at either one portion. The winding direction of one joint portion is opposite to that of the other joint portion. They are wound in the so-called balance winding so that currents caused by an external magnetic field falling at right angles with the paper cancel each other. Although not illustrated in Fig. 9, a guard film made of alumina, forsterite, or the like is formed over the rear magnetic core 9 and the thin film coil 11.

Similarly to the embodiments described before, the gap depth Gd of the thin film magnetic head of this embodiment can be obtained with high precision owing to the effect of the non-magnetic pattern material 8. Further, as a new effect obtained by using the thin film coil winding, the cost required for opening of the winding hole and winding work can be signifcantly reduced. As for the performance, the joint area of the rear magnetic core can be made sufficiently large in the magnetic circuit, and the tight winding to the magnetic core becomes possible by the use of the thin film coil. Accordingly, the recording/reproducing efficiency of the head can be improved. Since the perforating work of the winding hole has been eliminated, the film deterioration due to work can be completely avoided.

Figs. 9a to 9f show the manufacturing process of the thin film magnetic head illustrated in Fig. 8. The steps of the manufacturing process will now be described one after another.

In the step of Fig. 9a, the non-magnetic pattern materials 8 and 8a modeling the front magnetic core in the negative form are formed on the non-magnetic substrate 1.

In the step of Fig. 9b, the magnetic core 2' composed of the magnetic thin film is buried into the concave portion of the pattern and is scraped to be flattened.

In the step of Fig. 9c, a half of the magnetic core 2' is shaved and removed to form the gap face 4 as well as the L-shaped magnetic core 2.

In the step of Fig. 9d, the gap material 5 is coated and the magnetic core is buried into the remaining half surface and flattened to form the I-shaped magnetic core 3.

In the step of Fig. 9e, copper, aluminum or the like is coated by vaporization and etched via $SiO_2$ insulating films to form a vortex-shaped thin film coil 11. Since at this time the non-magnetic pattern material 8 is used, the surface on which the thin film coil 11 is formed is flat. Accordingly, failures such as coil break can be reduced as compared with an uneven surface. Thereafter, the $SiO_2$ insulation film is coated over the

- 19 -

0152064

upper surface of the thin film coil 11.

In the step of Fig. 9f, the rear magnetic core 9 is so formed as to bridge between portions of both legs of the front magnetic core (the L-shaped magnetic core 2 and the I-shaped magnetic core 3), which are surrounded by the thin film coil 11. At this time, the mask sputtering method is effective in preventing the core joint portion from exceeding the thin film coil 11. Thereafter, the guard film is adhered and cylindrical abrasion is applied to the front surface 13 to accomplish the thin film magnetic head 10 as illustrated in Fig. 8.

Fig. 10 shows still another embodiment of a thin film magnetic head according to the present invention. The thin film magnetic head 10 includes a plurality of gaps (two gaps in Fig. 10) and thin film coils 11a and 11b. Effects similar to those of Figs. 8 and 9 are obtained.

CLAIMS:

1.     A thin film magnetic head (10) comprising:

a substrate (1) of a non-magnetic material;

magnetic cores (2, 3) made of magnetic thin films formed on said substrate, said magnetic cores forming a ring-shaped magnetic circuit;

a non-magnetic gap material (5) for forming a head gap of said magnetic cores;

windings (7) having linkage with said magnetic circuit of said magnetic cores;

a non-magnetic pattern material (8) provided on said non-magnetic substrate for the purpose of defining a gap depth (Gd), said non-magnetic pattern material being at least disposed within a region surrounded by said magnetic circuit of said magnetic cores, and said non-magnetic pattern material being disposed at the side of the head gap depth formed by said non-magnetic material.

2.     A thin film magnetic head (10) according to Claim 1, wherein said non-magnetic pattern material is so shaped as to have two boundaries ($\ell_1$, $\ell_2$) which make an acute angle and which approach the front face of said magnetic core, and wherein a winding hole (6) throughing said non-magnetic pattern material to pass through said windings is provided far from the front face of said magnetic core beyond said two boundaries.

3.     A thin film magnetic head (10) according to Claim 2, wherein the shape of said non-magnetic pattern material is trapezoidal.

4.          A thin film magnetic head (10) according to Claim

0152064

2, wherein said non-magnetic pattern material includes a second boundary (12) forming a gap depth defining face, said second boundary (12) jointing said boundaries

$(\ell_1, \ell_2)$, said second boundary being near and parallel to the front face of said magnetic core.

5.          A thin film magnetic head (10) according to Claim 4, wherein the length of said second boundary (12) for defining said gap depth does not exceed 100 μm.

6.          A thin film magnetic head (10) according to Claim 2, wherein said magnetic cores include:

          first and second head cores (2a, 3) forming a first magnetic circuit so as to surround a first gap material (5a) of said non-magnetic material and the first gap depth defining material (8c) of said non-magnetic pattern material; and

          the third and fourth head cores (2b, 3) forming the second magnetic circuit so as to surround the second gap material (5b) of said non-magnetic material and the second gap depth defining material (8d) of said non-magnetic pattern material,

          and wherein the first and second winding holes (6a, 6b) respectively for passing through the first and second coils (7a, 7b) of said windings are provided through said first gap depth defining material and said non-magnetic substrate and through said second gap depth defining material and said non-magnetic substrate,

respectively.

0152064

7.      A thin film magnetic head (10) according to Claim 6, wherein each of said first and second gap depth defining materials has two boundaries which make an acute angle and which approach the front face of said first, second, third and fourth head cores.

8.      A thin film magnetic head (10) according to Claim 7, wherein the shape of said non-magnetic pattern material is trapezoidal.

9.      A thin film magnetic head (10) according to Claim 7, wherein each of said first and second gap depth defining materials has a second boundary (12) which crosses said and which forms a gap depth defining face nearly parallel to the front face of said head core.

10.     A thin film magnetic head (10) according to Claim 9, wherein the length of said gap depth defining boundary (12) does not exceed 100 μm.

11.     A thin film magnetic head (10) according to Claim 1, wherein said magnetic cores include:

        the first and second front cores (2, 3) having front portions which confront each other with said non-magnetic material (gap material) therebetween and having rear portions which are open-circuited by said non-magnetic pattern material; and

        a rear core (9) for magnetically coupling the rear portions of said front cores,

        and wherein said windings comprise a thin film coil which surrounds at least one joint portion where said rear core is jointed respectively to said first and second front cores and which has linkage with said joint portions.

12. A thin film magnetic head (10) according to Claim 11, wherein the shape of said non-magnetic pattern material is trapezoidal.

13. A thin film magnetic head (10) according to Claim 7, wherein each of said first and second gap depth defining materials has a second boundary (12) which crosses said two boundaries and which forms a gap depth defining face nearly parallel to the front face of said head core.

14. A thin film magnetic head (10) according to Claim 9, wherein the length of said gap depth defining second boundary (12) does not exceed 100 μm.

15. A thin film magnetic head (10) according to Claim 1, wherein said magnetic cores include:

the first and second front cores (2a, 3) having front portions which confront each other with the first gap material of said non-magnetic material between and having rear portions which are open-circuited by the first pattern material of said non-magnetic pattern material;

the first rear core which magnetically couples rear portions of said first and second front cores and which constitutes the first magnetic circuit in conjunction with said first and second front cores;

the third and fourth front cores (2b, 3) having front portions which confront each other with the second gap material of said non-magnetic material between and having rear portions which are open-circuited by the second pattern material of said non-magnetic pattern material; and

the second rear core which magnetically couples rear portions of said third and fourth front cores and which constitutes the second magnetic circuit in conjunction with said third and fourth front cores,

and wherein said windings comprise the first and second thin film coils (11a, 11b), the first thin film coil surrounds the first joint portion where said first rear core is jointed to said first and second front cores and has linkage with said first joint portion, and the second thin film coil surrounds the second joint portion where said second rear core is jointed to said third and fourth front cores and has linkage with said second joint portion.

16.     A thin film magnetic head (10) according to Claim 15, wherein the shape of said non-magnetic pattern material is trapezoidal.

17.     A thin film magnetic head (10) according to Claim 15, wherein each of said first and second gap depth defining materials has a second boundary (12) which crosses said boundaries and which forms a gap depth defining face nearly parallel to the front face of said head core.

18.     A thin film magnetic head (10) according to Claim 15, wherein the length of said gap depth defining second boundary (12) does not exceed 100 µm.

19.     A thin film magnetic head (10) according to Claim

0152064

1, further comprising a non-magnetic pattern material (8a) for preventing the magnetic thin film from peeling off, said non-magnetic pattern material being disposed outside said magnetic circuit so as to surround said magnetic cores.

20. A thin film magnetic head according to Claim 1, wherein said non-magnetic gap material (5) is made of

$SiO_2$.

21. A thin film magnetic head according to Claim 1, wherein said non-magnetic pattern material (8) is made of Al.

22. A method for manufacturing a thin film magnetic head comprising steps of:

forming a non-magnetic pattern material (8) for defining the gap depth on a non-magnetic substrate (1);

forming a magnetic thin film (2') over the entire surface of said non-magnetic substrate, excepting said gap depth defining non-magnetic pattern material;

removing half of said magnetic thin film so as to expose the face on the gap line of said non-magnetic pattern material and forming a head gap face (4);

forming a non-magnetic material (gap material) on said head gap face of said magnetic thin film as a head gap;

forming another magnetic thin film (3) on the place of said non-magnetic substrate, wherefrom said half of said magnetic thin film has been removed, so as to cover said gap material and a face of said non-magnetic pattern material located on the gap line;

forming a winding hole (6) through said non-magnetic pattern and said non-magnetic substrate; and

applying cylindrical abrasion to a front face comprising said non-magnetic substrate, said magnetic thin film, and said gap material.

23. A method for manufacturing a thin film magnetic head according to Claim 22, wherein said non-magnetic pattern material comprises aluminum.

24. A method for manufacturing a thin film magnetic head comprising steps of:

forming a non-magnetic pattern material (8) modeling a magnetic core (front core) in negative form on a non-magnetic substrate (1);

forming a magnetic core (2') comprising a magnetic film into a concave portion resultant from said pattern material;

forming a gap face (4) and an L-shaped magnetic core (2) by removing half of said magnetic core (2');

forming a gap material (5) on said gap face of said magnetic core and forming an I-shaped magnetic core (3) comprising a magnetic thin film into a space wherefrom said half of said magnetic core has been removed;

forming a thin film spiral coil (11) on an insulating film so as to surround rear portions of said L-shaped and I-shaped magnetic cores (2, 3), said insulating film being disposed on upper surfaces of said non-magnetic pattern material and said L-shaped and I-shaped magnetic cores;

forming a rear magnetic core (9) after forming another insulating film provided on said spiral coil, between the rear portion of said L-shaped magnetic core (2) and the rear portion of said I-shaped magnetic core (3); and

applying cylindrical abrasion to a front face of said magnetic core.

25. A method for manufacturing a thin film magnetic head according to Claim 24, wherein said non-magnetic pattern material comprises aluminum.

# FIG.1
## PRIOR ART

# FIG.2

# FIG.3a

# FIG.3b

FIG.3c

FIG.3d

FIG.3e

FIG.4

FIG.5a

FIG.5b

# FIG. 6

14

10

# FIG. 7

7a  2a
6a  3
8c  2b
Gd₁
5a  1
Xg  7b
5b  Gd₂  6b
8d

10

# FIG. 8

11
8a  2  9
8  1
5
13  Gd  3
8a

10

0152064

## FIG.9a

## FIG.9b

## FIG.9c

## FIG.9d

## FIG.9e

## FIG.9f

## FIG.10